(19) Europäisches Patentamt
European Patent Office
Office européen des brevets

(11) **EP 3 556 732 A1**

## EUROPEAN PATENT APPLICATION
published in accordance with Art. 153(4) EPC

(43) Date of publication:
**23.10.2019 Bulletin 2019/43**

(21) Application number: **17880756.6**

(22) Date of filing: **27.11.2017**

(51) Int Cl.:
***C01G 53/00*** (2006.01)    ***H01M 4/505*** (2010.01)
***H01M 4/525*** (2010.01)

(86) International application number:
**PCT/JP2017/042388**

(87) International publication number:
**WO 2018/110256 (21.06.2018 Gazette 2018/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **14.12.2016   JP 2016242573**

(71) Applicants:
• **Sumitomo Chemical Company, Limited
Tokyo 104-8260 (JP)**

• **Tanaka Chemical Corporation
Fukui-shi
Fukui 910-3131 (JP)**

(72) Inventors:
• **IMANARI Yuichiro
Niihama-shi, Ehime 7928521 (JP)**
• **MATSUMOTO Kayo
Fukui-shi
Fukui 910-3131 (JP)**

(74) Representative: **Vossius & Partner
Patentanwälte Rechtsanwälte mbB
Siebertstrasse 3
81675 München (DE)**

(54) **LITHIUM METAL COMPOSITE OXIDE POWDER, POSITIVE ELECTRODE ACTIVE MATERIAL FOR LITHIUM SECONDARY CELL, POSITIVE ELECTRODE FOR LITHIUM SECONDARY CELL, AND LITHIUM SECONDARY CELL**

(57)    A lithium metal composite oxide powder includes primary particles; and secondary particles formed by aggregation of the primary particles, in which the lithium metal composite oxide powder is represented by Composition Formula (1), and the lithium metal composite oxide powder satisfies all of requirements (A), (B), and (C).

**Description**

Technical Field

The present invention relates to a lithium metal composite oxide powder, a positive electrode active material for a lithium secondary cell, a positive electrode for a lithium secondary cell, and a lithium secondary cell.
Priority is claimed on Japanese Patent Application No. 2016-242573, filed on December 14, 2016, the content of which is incorporated herein by reference.

Background Art

A lithium metal composite oxide has been used as a positive electrode active material for a lithium secondary cell (hereinafter, sometimes referred to as "positive electrode active material". Lithium secondary cells have been already in practical use not only for small power sources in mobile phone applications, notebook personal computer applications, and the like but also for medium-sized and large-sized power sources in automotive applications, power storage applications, and the like.
In order to improve the performance of the lithium secondary cell such as volume capacity density, there have been attempts focusing on the particle strength of the positive electrode active material (for example, PTLs 1 to 4).

Citation List

Patent Literature

[PTL 1] Japanese Unexamined Patent Application, First Publication No. 2004-220897
[PTL 2] PCT International Publication No. WO2005/124898
[PTL 3] PCT International Publication No. WO2005/028371
[PTL 4] PCT International Publication No. WO2005/020354

Summary of Invention

Technical Problem

As the application area of lithium secondary cells expands, the positive electrode active material used in the lithium secondary cells requires a further improvement in volume capacity density. Here, "volume capacity density" means cell capacity per unit volume (amount of electric power that can be stored). The larger the value of volume capacity density, the more suitable for a small cell.
However, positive electrode active materials for a lithium secondary cell as described in PTLs 1 to 4 have room for improvement from the viewpoint of improving the volume capacity density.
The present invention has been made in view of the above circumstances, and an object thereof is to provide a lithium metal composite oxide powder having a high volume capacity density, a positive electrode active material for a lithium secondary cell containing the lithium metal composite oxide powder, a positive electrode for a lithium secondary cell using the positive electrode active material for a lithium secondary cell, and a lithium secondary cell having the positive electrode for a lithium secondary cell.

Solution to Problem

That is, the present invention includes the inventions of the following [1] to [7].

[1] A lithium metal composite oxide powder including primary particles of a lithium metal composite oxide; and secondary particles formed by aggregation of the primary particles, in which the lithium metal composite oxide is represented by Composition Formula (1), and the lithium metal composite oxide powder satisfies all of requirements (A), (B), and (C),

$$Li[Li_x(Ni_{(1-y-z-w)}Co_yMn_zM_w)_{1-x}]O_2 \qquad (1)$$

(where M is one or more metal elements selected from the group consisting of Fe, Cu, Ti, Mg, Al, W, B, Mo, Nb, Zn, Sn, Zr, Ga, and V and $-0.1 \leq x \leq 0.2$, $0 < y \leq 0.4$, $0 \leq z \leq 0.4$, and $0 \leq w \leq 0.1$ are satisfied),

(A) a BET specific surface area is less than 1 m$^2$/g,

(B) an average particle crushing strength of the secondary particles exceeds 100 MPa, and

(C) a ratio ($D_{90}/D_{10}$) of a 90% cumulative volume particle size $D_{90}$ to a 10% cumulative volume particle size $D_{10}$ is 2.0 or more.

[2] The lithium metal composite oxide powder according to [1], in which, in powder X-ray diffraction measurement using CuKα radiation, assuming that a half-width of a diffraction peak in a range of 2θ = 18.7 ± 1° is A and a half-width of a diffraction peak in a range of 2θ = 44.4 ± 1° is B, A/B is 0.9 or less.

[3] The lithium metal composite oxide powder according to [1] or [2], in which, in powder X-ray diffraction measurement using CuKα radiation, assuming that a crystallite diameter of a diffraction peak in a range of 2θ = 18.7 ± 1° is $L_a$ and a crystallite diameter of a diffraction peak in a range of 2θ = 44.4 ± 1° is $L_b$, $L_a/L_b$ exceeds 1.

[4] The lithium metal composite oxide powder according to any one of [1] to [3], in which, in Composition Formula (1), $0 < x \leq 0.2$ is satisfied.

[5] A positive electrode active material for a lithium secondary cell, including the lithium metal composite oxide powder according to any one of [1] to [4].

[6] A positive electrode for a lithium secondary cell, including the positive electrode active material for a lithium secondary cell according to [5].

[7] A lithium secondary cell including the positive electrode for a lithium secondary cell according to [6].

Advantageous Effects of Invention

According to the present invention, it is possible to provide a lithium metal composite oxide powder having a high volume capacity density, a positive electrode active material for a lithium secondary cell containing the lithium metal composite oxide powder, a positive electrode for a lithium secondary cell using the positive electrode active material for a lithium secondary cell, and a lithium secondary cell having the positive electrode for a lithium secondary cell.

Brief Description of Drawings

FIG. 1A is a schematic configuration view illustrating an example of a lithium-ion secondary cell.

FIG. 1B is a schematic configuration view illustrating an example of the lithium-ion secondary cell.

FIG. 2 is an SEM image of a secondary particle cross section of Example 1.

Description of Embodiments

<lithium metal composite oxide powder>

An aspect of the present invention is a lithium metal composite oxide powder including primary particles of a lithium metal composite oxide; and secondary particles formed by aggregation of the primary particles. The lithium metal composite oxide according to the aspect of the present invention is represented by Composition Formula (1), and the lithium metal composite oxide powder satisfies all of requirements (A), (B), and (C).

In the present specification, "primary particles" are the smallest units observed as independent particles by SEM, and the particles are single crystals or polycrystals in which crystallites are aggregated.

In the present specification, "secondary particles" are particles formed by aggregation of primary particles and can be observed by SEM.

Hereinafter, the lithium metal composite oxide powder of the present embodiment will be described.

In the present embodiment, the lithium metal composite oxide is represented by Composition Formula (1).

$$Li[Li_x(Ni_{(1-y-z-w)}Co_yMn_zM_w)_{1-x}]O_2 \qquad (1)$$

(where M is one or more metal elements selected from the group consisting of Fe, Cu, Ti, Mg, Al, W, B, Mo, Nb, Zn, Sn, Zr, Ga, and V and $-0.1 \leq x \leq 0.2$, $0 < y \leq 0.4$, $0 \leq z \leq 0.4$, $0 \leq w \leq 0.1$, and $0.25 < y + z + w$ are satisfied)

From the viewpoint of obtaining a lithium secondary cell having high cycle characteristics, x in Composition Formula (1) is preferably more than 0, more preferably 0.01 or more, and even more preferably 0.02 or more. In addition, from the viewpoint of obtaining a lithium secondary cell having higher initial Coulombic efficiency, x in Composition Formula (1) is preferably 0.2 or less, more preferably 0.1 or less, even more preferably 0.08 or less, and particularly preferably 0.06 or less.

The upper limit and the lower limit of x can be randomly combined. Particularly, in the present embodiment, $0 < x \leq 0.2$ is preferable, $0.01 \leq x \leq 0.08$ is more preferable, and $0.02 \leq x \leq 0.06$ is even more preferable.

In addition, from the viewpoint of obtaining a lithium secondary cell having low cell resistance, y in Composition Formula (1) is preferably 0.005 or more, more preferably 0.01 or more, and even more preferably 0.05 or more. y in Composition Formula (1) is preferably 0.4 or less, more preferably 0.35 or less, and even more preferably 0.33 or less.

The upper limit and the lower limit of y can be randomly combined. For example, $0.005 \leq y \leq 0.4$ is preferable, $0.01 \leq y \leq 0.35$ is more preferable, and $0.05 \leq y \leq 0.33$ is even more preferable.

In addition, from the viewpoint of obtaining a lithium secondary cell having high cycle characteristics, z in Composition Formula (1) is preferably 0 or more, more preferably 0.01 or more, and more preferably 0.03 or more. In addition, from the viewpoint of obtaining a lithium secondary cell having high storage characteristics at high temperatures (for example, in an environment at 60°C), z in Composition Formula (1) is preferably 0.4 or less, more preferably 0.38 or less, and even more preferably 0.35 or less.

The upper limit and the lower limit of z can be randomly combined. For example, $0 \leq z \leq 0.4$ is preferable, $0.01 \leq z \leq 0.38$ is more preferable, and $0.03 \leq z \leq 0.35$ is even more preferable.

In addition, from the viewpoint of obtaining a lithium secondary cell having low cell resistance, w in Composition Formula (1) is preferably more than 0, more preferably 0.0005 or more, and even more preferably 0.001 or more. In addition, w in Composition Formula (1) is preferably 0.09 or less, more preferably 0.08 or less, and even more preferably 0.07 or less.

The upper limit and the lower limit of w can be randomly combined. For example, $0 < w \leq 0.09$ is preferable, $0.0005 \leq w \leq 0.08$ is more preferable, $0.001 \leq w \leq 0.07$ is even more preferable.

M in Composition Formula (1) represents one or more metals selected from the group consisting of Fe, Cu, Ti, Mg, Al, W, B, Mo, Nb, Zn, Sn, Zr, Ga, and V.

Furthermore, M in Composition Formula (1) is preferably one or more metals selected from the group consisting of Ti, Mg, Al, W, B, and Zr from the viewpoint of obtaining a lithium secondary cell having high cycle characteristics, and is preferably one or more metals selected from the group consisting of Al, W, B, and Zr from the viewpoint of obtaining a lithium secondary cell having high thermal stability.

[Requirement (A)]

In the present embodiment, the BET specific surface area of the lithium metal composite oxide powder is less than 1 $m^2/g$. In the present embodiment, from the viewpoint of obtaining a lithium secondary cell having a high volume capacity density, the BET specific surface area of the lithium metal composite oxide powder is preferably 0.95 $m^2/g$ or less, more preferably 0.9 $m^2/g$ or less, and particularly preferably 0.85 $m^2/g$ or less. The lower limit value of the BET specific surface area of the lithium metal composite oxide powder is not particularly limited, but examples thereof include 0.1 $m^2/g$ or more, 0.15 $m^2/g$ or more, and 0.2 $m^2/g$ or more.

The upper limit and the lower limit of the BET specific surface area can be randomly combined. For example, the BET specific surface area is 0.1 $m^2/g$ or more and less than 1 $m^2/g$, preferably 0.1 $m^2/g$ or more and 0.95 $m^2/g$ or less, more preferably 0.15 $m^2/g$ or more and 0.9 $m^2/g$ or less, and particularly preferably 0.2 $m^2/g$ or more and 0.85 $m^2/g$ or less.

[Requirement (B)]

In the present embodiment, the lithium metal composite oxide powder includes primary particles and secondary particles formed by aggregation of the primary particles.

In the present embodiment, the average particle crushing strength of the secondary particles exceeds 100 MPa. In the present embodiment, from the viewpoint of obtaining a lithium secondary cell having a high volume capacity density, the average particle crushing strength of the secondary particles is preferably 101 MPa or more, more preferably 110 MPa or more, and particularly preferably 120 MPa or more. The upper limit value of the average particle crushing strength of the secondary particles is not particularly limited, but examples thereof include 300 MPa or less and 250 MPa or less. The upper limit and the lower limit of the average particle crushing strength can be randomly combined. For example, the average particle crushing strength of the secondary particles is more than 100 MPa and 300 MPa or less, preferably 101 MPa or more and 300 MPa or less, more preferably 110 MPa or more and 250 MPa or less, and particularly preferably 120 MPa or more and 250 MPa or less.

[Measurement Method of Average Particle Crushing Strength]

In the present invention, the "average particle crushing strength" of the secondary particles present in the lithium metal composite oxide powder refers to a value measured by the following method.

First, for the lithium metal composite oxide powder, using a micro compression tester (MCT-510, manufactured by Shimadzu Corporation), a test pressure (load) is applied to a single secondary particle randomly selected, and the displacement of the secondary particle is measured. When the test pressure is gradually increased, the pressure value at which the displacement is maximum while the test pressure is almost constant is taken as a test force (P), and the particle crushing strength (St) is calculated by the formula by Hiramatsu et al. shown in Formula (A) (Journal of the Mining and Metallurgical Institute of Japan, Vol.81, (1965)). This operation is performed a total of five times, and the average particle crushing strength is calculated from the average value of five particle crushing strengths.

$$St = 2.8 \times P/(\pi \times d \times d) \quad \text{(d: diameter of secondary particle)} \ldots (A)$$

[Requirement (C)]

In the present embodiment, the ratio ($D_{90}/D_{10}$) of the 90% cumulative volume particle size $D_{90}$ to the 10% cumulative volume particle size $D_{10}$ of the lithium metal composite oxide powder is 2.0 or more. In the present embodiment, $D_{90}/D_{10}$ is preferably 2.1 or more, more preferably 2.2 or more, and particularly preferably 2.3 or more. The upper limit of $D_{90}/D_{10}$ is not particularly limited, but examples thereof include 5.0 or less and 4.0 or less.

The upper limit and the lower limit of $D_{90}/D_{10}$ can be randomly combined. For example, $D_{90}/D_{10}$ is 2.0 or more and 5.0 or less, preferably 2.1 or more and 5.0 or less, more preferably 2.2 or more and 4.0 or less, and particularly preferably 2.3 or more and 4.0 or less.

The cumulative volume particle size is measured by a laser diffraction scattering method.

First, 0.1 g of the lithium metal composite oxide powder is poured into 50 ml of 0.2 mass% sodium hexametaphosphate aqueous solution to obtain a dispersion liquid in which the powder was dispersed.

Next, the particle size distribution of the obtained dispersion liquid is measured using Microtrac MT3300EXII (laser diffraction scattering particle size distribution measuring apparatus) manufactured by MicrotracBEL Corp. to obtain a volume-based cumulative particle size distribution curve.

In the obtained cumulative particle size distribution curve, the value of the particle diameter viewed from the fine particle side at a 10% cumulative point is a 10% cumulative volume particle size $D_{10}$ ($\mu$m), and the value of the particle diameter viewed from the fine particle side at a 90% cumulative point is a 90% cumulative volume particle size $D_{90}$ ($\mu$m).

The lithium metal composite oxide powder of the present embodiment satisfies all the requirements (A) to (C). It is presumed that when the lithium metal composite oxide powder satisfying the requirement (A) and (B), which has high particle strength, has a broad particle size distribution state satisfying the requirement (C), the electrode density when the lithium metal composite oxide powder is used for a positive electrode for a lithium secondary cell is improved, and thus the volume capacity density can be improved.

In the lithium metal composite oxide powder of the present embodiment, in powder X-ray diffraction measurement using CuK$\alpha$ radiation, assuming that the half-width of a diffraction peak in a range of $2\theta = 18.7 \pm 1°$ is A and the half-width of a diffraction peak in a range of $2\theta = 44.4 \pm 1°$ is B, A/B is preferably 0.9 or less, more preferably 0.899 or less, and even more preferably 0.8 or less.

The lower limit of A/B is not particularly limited, but examples thereof include 0.2 or more and 0.3 or more.

The upper limit and the lower limit of A/B can be randomly combined. For example, A/B is preferably 0.2 or more and 0.9 or less, more preferably 0.2 or more and 0.9 or less, and even more preferably 0.3 or more and 0.8 or less.

The half-width A and the half-width B can be calculated by the following method.

First, regarding the lithium metal composite oxide powder, in powder X-ray diffraction measurement using CuK$\alpha$ radiation, the diffraction peak within a range of $2\theta = 18.7 \pm 1°$ (hereinafter, sometimes referred to as peak A') and the diffraction peak within a range of $2\theta = 44.4 \pm 1°$ (hereinafter, sometimes referred to as peak B') are determined.

Next, the profile of each diffraction peak is approximated by a Gaussian function, and the difference in $2\theta$ between two points where the value of the second derivative curve becomes zero is multiplied by a coefficient 2ln2 ($\approx$1.386) to calculate the half-width A of the peak A' and the half-width B of the peak B' (for example, refer to "Practice of powder X-ray analysis, Introduction to Rietveld method" June 20, 2006, 7th edition, Izumi Nakai, Fujio Izumi).

Furthermore, the crystallite diameter can be calculated by using the Scherrer equation $D = K\lambda/B\cos\theta$ (D: crystallite diameter, K: Scherrer constant, B: half-width of diffraction peak, $\theta$: Bragg angle). Calculation of a crystallite diameter by the above equation is a method hitherto used (for example, refer to "X-ray structure analysis, determine arrangement of atoms" issued April 30, 2002, Third Edition, Yoshio Waseda, Matsubara Eiichiro).

In the present embodiment, in powder X-ray diffraction measurement using CuKα radiation, assuming that the crystallite diameter of a diffraction peak in a range of $2\theta = 18.7 \pm 1°$ is $L_a$ and the crystallite diameter of a diffraction peak in a range of $2\theta = 44.4 \pm 1°$ is $L_b$, $L_a/L_b$ is preferably more than 1, more preferably 1.05 or more, and particularly preferably 1.1 or more. The upper limit of $L_a/L_b$ is not particularly limited, but examples thereof include 2.0 or less and 1.8 or less.

The upper limit and the lower limit thereof can be randomly combined. For example, $L_a/L_b$ is preferably more than 1 and 2.0 or less, more preferably 1.05 or more and 2.0 or less, and particularly preferably 1.1 or more and 1.8 or less.

(Layered Structure)

The crystal structure of the lithium metal composite oxide powder is a layered structure, and more preferably a hexagonal crystal structure or a monoclinic crystal structure.

The hexagonal crystal structure belongs to any one space group selected from the group consisting of P3, P3$_1$, P3$_2$, R3, P-3, R-3, P312, P321, P3$_1$12, P3$_1$21, P3$_2$12, P3$_2$21, R32, P3m1, P31m, P3c1, P31c, R3m, R3c, P-31m, P-31c, P-3m1, P-3c1, R-3m, R-3c, P6, P6$_1$, P6$_5$, P6$_2$, P6$_4$, P6$_3$, P-6, P6/m, P6$_3$/m, P622, P6$_1$22, P6$_5$22, P6$_2$22, P6$_4$22, P6$_3$22, P6mm, P6cc, P6$_3$cm, P6$_3$mc, P-6m2, P-6c2, P-62m, P-62c, P6/mmm, P6/mcc, P6$_3$/mcm, and P6$_3$/mmc.

In addition, the monoclinic crystal structure belongs to any one space group selected from the group consisting of P2, P2$_1$, C2, Pm, Pc, Cm, Cc, P2/m, P2$_1$/m, C2/m, P2/c, P2$_1$/c, and C2/c.

Among these, from the viewpoint of obtaining a lithium secondary cell having a high discharge capacity, the crystal structure is particularly preferably a hexagonal crystal structure belonging to the space group R-3m, or a monoclinic crystal structure belonging to C2/m.

In the present embodiment, a lithium compound is used in a step of manufacturing a positive electrode active material for a lithium secondary cell. As the lithium compound, any one or a mixture of two or more of lithium carbonate, lithium nitrate, lithium sulfate, lithium acetate, lithium hydroxide, lithium hydroxide hydrate, lithium oxide, lithium chloride, and lithium fluoride can be used. Among these, one or both of lithium hydroxide and lithium carbonate are preferable.

From the viewpoint of enhancing the handleability of the positive electrode active material for a lithium secondary cell, the lithium carbonate component contained in the lithium metal composite oxide is preferably 0.4 mass% or less, more preferably 0.39 mass% or less, and particularly preferably 0.38 mass% or less with respect to the total mass of the lithium metal composite oxide.

In an aspect of the present invention, the lithium carbonate component contained in the lithium metal composite oxide is preferably 0 mass% or more and 0.4 mass% or less, more preferably 0.001 mass% or more and 0.39 mass% or less, and even more preferably 0.01 mass% or more and 0.38 mass% or less with respect to the total mass of the lithium metal composite oxide.

Further, from the viewpoint of enhancing the handleability of the lithium metal composite oxide, the lithium hydroxide component contained in the lithium metal composite oxide is preferably 0.35 mass% or less, more preferably 0.25 mass% or less, and particularly preferably 0.2 mass% or less with respect to the total mass of the lithium metal composite oxide.

In another aspect of the present invention, the lithium hydroxide component contained in the lithium metal composite oxide is preferably 0 mass% or more and 0.35 mass% or less, more preferably 0.001 mass% or more and 0.25 mass% or less, and even more preferably 0.01 mass% or more and 0.20 mass% or less with respect to the total mass of the lithium metal composite oxide.

<Positive Electrode Active Material for Lithium Secondary Cell>

Another aspect of the present invention provides a positive electrode active material for a lithium secondary cell which contains the lithium metal composite oxide powder of the present invention.

[Manufacturing Method of Lithium Metal Composite Oxide Powder]

In manufacturing of the lithium metal composite oxide powder in another aspect of the present invention, first, it is preferable that a metal composite compound containing essential metals including metals other than lithium, that is, Ni, Co, and Mn and an optional metal including one or more of Fe, Cu, Ti, Mg, Al, W, B, Mo, Nb, Zn, Sn, Zr, Ga, and V is first prepared, and the metal composite compound is calcined with an appropriate lithium compound. The optional metal is a metal optionally contained in the metal composite compound as desired, and the optional metal may not be contained in the metal composite compound in some cases. As the metal composite compound, a metal composite hydroxide or a metal composite oxide is preferable. Hereinafter, an example of a manufacturing method of a positive electrode active material will be described by separately describing a step of manufacturing the metal composite compound and a step of manufacturing the lithium metal composite oxide.

(Step of Manufacturing Metal Composite Compound)

The metal composite compound can be produced by a generally known batch coprecipitation method or continuous coprecipitation method. Hereinafter, the manufacturing method will be described in detail, taking a metal composite hydroxide containing nickel, cobalt, manganese as metals and an optional metal M as an example.

First, by a coprecipitation method, particularly a continuous method described in Japanese Unexamined Patent Application, First Publication No. 2002-201028, a nickel salt solution, a cobalt salt solution, a manganese salt solution, an M salt solution, and a complexing agent are reacted, whereby a metal composite hydroxide represented by $Ni_{(1-y-z-w)}Co_yMn_zM_w(OH)_2$ (in the formula, $0 < y \leq 0.4$, $0 \leq z \leq 0.4$, $0 \leq w \leq 0.1$, and M represents the same metal as described above) is manufactured.

A nickel salt which is a solute of the nickel salt solution is not particularly limited, and for example, any of nickel sulfate, nickel nitrate, nickel chloride, and nickel acetate can be used. As a cobalt salt which is a solute of the cobalt salt solution, for example, any of cobalt sulfate, cobalt nitrate, cobalt chloride, and cobalt acetate can be used. As a manganese salt which is a solute of the manganese salt solution, for example, any of manganese sulfate, manganese nitrate, manganese chloride, and manganese acetate can be used. As an M salt which is a solute of the M salt solution, for example, any of M sulfate, M nitrate, M chloride, and M acetate can be used. The above metal salts are used at a ratio corresponding to the composition ratio of the $Ni_{(1-y-z-w)}Co_yMn_zM_w(OH)_2$. That is, the amount of each of the metal salts is defined so that the molar ratio of nickel, cobalt, manganese, and M in the mixed solution containing the above metal salts becomes $(1 - y - z - w):y:z:w$. Also, water is used as a solvent.

The complexing agent is capable of forming a complex with ions of nickel, cobalt, and manganese in an aqueous solution, and examples thereof include ammonium ion donors (ammonium hydroxide, ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent may not be contained, and in a case where the complexing agent is contained, the amount of the complexing agent contained in the mixed solution containing the nickel salt solution, the cobalt salt solution, the manganese salt solution, the M salt solution, and the complexing agent is, for example, more than 0 and 2.0 or less in terms of molar ratio to the sum of the number of moles of the metal salts.

During the precipitation, an alkali metal hydroxide (for example, sodium hydroxide, or potassium hydroxide) is added, if necessary, in order to adjust the pH value of the aqueous solution.

When the nickel salt solution, the cobalt salt solution, the manganese salt solution, and the M salt solution in addition to the complexing agent are continuously supplied to a reaction tank, nickel, cobalt, manganese, and M react, whereby $Ni_{(1-y-z-w)}Co_yMn_zM_w(OH)_2$ is formed. During the reaction, the temperature of the reaction tank is controlled to be, for example, 20°C or more and 80°C or less, and preferably in a range of 30°C to 70°C, and the pH value in the reaction tank (when measured at 40°C) is controlled to be, for example, a pH of 9 or more and a pH of 13 or less, and preferably in a range of a pH of 11 to 13 such that the materials in the reaction tank are appropriately stirred. The reaction tank is of a type that allows the formed reaction precipitate to overflow for separation.

By appropriately controlling the concentrations of the metal salts supplied to the reaction tank, the stirring speed, the reaction temperature, the reaction pH, calcining conditions, which will be described later, and the like, it is possible to control the requirements (A), (B), and (C) of a lithium metal composite oxide powder, which is finally obtained in the following steps.

For example, when the reaction pH in the reaction tank is decreased, the primary particle diameter of the metal composite compound increases, and a lithium metal composite oxide powder that has a low BET specific surface area and satisfies the requirement (A) is easily obtained in the subsequent step.

When the oxidation state in the reaction tank is decreased, a dense metal composite compound is easily obtained, and a lithium metal composite oxide powder that satisfies the requirement (B) is easily obtained in the subsequent step. As a method of decreasing the oxidation state in the reaction tank, a method of setting the gas phase portion in the reaction tank to be under an inert atmosphere, for example, aeration or bubbling with an inert gas such as nitrogen, argon, carbon dioxide, or the use of oxalic acid, formic acid, sulfite, hydrazine, or the like can be employed.

In addition, when nucleation and growth of the metal composite compound proceed continuously and simultaneously in the reaction tank, the particle size distribution of the metal composite compound is likely to spread, and a lithium metal composite oxide powder that satisfies the requirement (C) in the subsequent step is easily obtained. Alternatively, the metal composite compound may be classified, or metal composite compounds different in particle size may be mixed and controlled to satisfy the requirement (C).

In order to realize a desired average particle crushing strength for the secondary particles, in addition to the control of the above conditions, bubbling by various gases, such as inert gases including nitrogen, argon, and carbon dioxide and oxidizing gases including air and oxygen, or a mixed gas thereof may be used in combination. To promote the oxidation of the raw materials, in addition to the gases, peroxides such as hydrogen peroxide, peroxide salts such as permanganate, perchlorate, hypochlorite, nitric acid, halogen, ozone, and the like can be used.

To promote the reduction state, in addition to the gases, organic acids such as oxalic acid and formic acid, sulfites, hydrazine, and the like can be used.

Each of the conditions of the reaction pH, the oxidation state, and the reaction temperature may be appropriately controlled so that the lithium metal composite oxide powder, which is finally obtained in the subsequent step, has desired physical properties. For example, in a case where the metal contained in the lithium metal composite oxide powder is aluminum, by setting the pH in the reaction tank (when measured at 40°C) to 11.5 to 13, setting the oxygen concentration with respect to the volume of the entire gas phase contained in the gas phase portion of the reaction tank as the oxidation state to 0 to 10 vol%, and setting the reaction temperature to 30°C to 70°C, the lithium metal composite oxide powder, which is finally obtained in the subsequent step, has desired physical properties.

The BET specific surface area and the average particle crushing strength of the secondary particles of the lithium metal composite oxide powder in the present invention can be in the specific ranges of the present invention by controlling calcining conditions, which will be described later, and the like using the metal composite compound described above.

Since the reaction conditions depend on the size of the reaction tank used and the like, the reaction conditions may be optimized while monitoring various physical properties of the lithium metal composite oxide powder, which is finally obtained in the subsequent step.

After the above reaction, the obtained reaction precipitate is washed with water and then dried to isolate a nickel cobalt manganese M hydroxide as a nickel cobalt manganese M composite compound. In addition, the reaction precipitate obtained may be washed with a weak acid water or an alkaline solution containing sodium hydroxide or potassium hydroxide, as necessary.

In the above example, the nickel cobalt manganese M hydroxide is manufactured, but a nickel cobalt manganese M composite oxide may be prepared. In a case of preparing the nickel cobalt manganese M composite oxide, for example, a step of bringing the coprecipitate slurry into contact with an oxidizing agent or a step of performing a heat treatment on the nickel cobalt manganese M hydroxide may be performed.

(Step of Manufacturing Lithium Metal Composite Oxide)

The metal composite oxide or hydroxide is dried and thereafter mixed with a lithium salt, that is, a lithium compound. The drying condition is not particularly limited, and for example, may be any of a condition under which a metal composite oxide or hydroxide is not oxidized and reduced (an oxide remains as an oxide and a hydroxide remains as a hydroxide), a condition under which a metal composite hydroxide is oxidized (a hydroxide is oxidized to an oxide), and a condition under which a metal composite oxide is reduced (an oxide is reduced to a hydroxide). In order to adopt the condition under which no oxidation and reduction occurs, an inert gas such as nitrogen, helium, or argon may be used, and to adopt the condition under which a hydroxide is oxidized, oxygen or air may be used. In addition, as a condition under which a metal composite oxide is reduced, a reducing agent such as hydrazine or sodium sulfite may be used in an inert gas atmosphere. As the lithium compound, any one or two or more of lithium carbonate, lithium nitrate, lithium sulfate, lithium acetate, lithium hydroxide, lithium hydroxide hydrate, lithium oxide, lithium chloride, and lithium fluoride can be mixed and used.

After drying the metal composite oxide or hydroxide, classification may be appropriately performed thereon. The amounts of the lithium compound and the metal composite hydroxide mentioned above are determined in consideration of the composition ratio of the final object. For example, in a case of using a nickel cobalt manganese M composite hydroxide, the amounts of the lithium compound and the metal composite hydroxide are determined to be proportions corresponding to the composition ratio of $Li[Li_x(Ni_{(1-y-x-w)}Co_yMn_zM_w)_{1-x}]O_2$. By calcining a mixture of the nickel cobalt manganese M metal composite hydroxide and the lithium compound, a lithium-nickel cobalt manganese M composite oxide is obtained. For the calcining, dry air, oxygen atmosphere, inert atmosphere, and the like are used depending on the desired composition, and a plurality of heating steps are performed as necessary.

The calcining temperature of the metal composite oxide or hydroxide and the lithium compound such as lithium hydroxide or lithium carbonate is not particularly limited, but is preferably 600°C or higher and 1100°C or lower, more preferably 750°C or higher and 1050°C or lower, and even more preferably 800°C or higher and 1025°C or lower in order to cause the BET specific surface area (requirement (A)) of the lithium metal composite oxide powder, the average particle crushing strength (requirement (B)) of the secondary particles, or the ratio of the cumulative volume particle sizes (requirement (C)) to be in a specific range of the present invention. When the calcining temperature is lower than 600°C, it is difficult to obtain a lithium metal composite oxide powder having an ordered crystal structure, and the energy density (discharge capacity) and charge and discharge efficiency (discharge capacity ÷ charge capacity) are likely to decrease. That is, when the calcining temperature is 600°C or higher, a lithium metal composite oxide powder having an ordered crystal structure is easily obtained, and the energy density and the charge and discharge efficiency are less likely to decrease.

On the other hand, when the calcining temperature is higher than 1100°C, it is difficult to obtain a lithium metal composite oxide powder having a target composition due to volatilization of lithium, and furthermore, the cell performance tends to be deteriorated. That is, when the calcining temperature is 1100°C or less, volatilization of lithium is less likely to occur, and a lithium metal composite oxide powder having a target composition is easily obtained. By causing the calcining temperature to be in a range of 600°C or more and 1100°C or less, a cell that exhibits particularly high energy density and has excellent charge and discharge efficiency and output characteristics can be produced.

The calcining time is preferably 3 hours to 50 hours in total until retention of a target temperature is ended after the target temperature is reached. When the calcining time is 50 hours or shorter, volatilization of lithium can be suppressed, and deterioration of the cell performance can be prevented. When the calcining time is shorter than 3 hours, the crystals develop poorly, and the cell performance tends to be deteriorated. In addition, it is also effective to perform preliminary calcining before the above-mentioned calcining. It is preferable to perform the preliminary calcining at a temperature in a range of 300°C to 850°C for 1 to 10 hours.

It is preferable that the time until the calcining temperature is reached after the start of temperature increase is 1 hour or longer and 10 hours or shorter. When the time from the start of temperature increase until the calcining temperature is reached is in this range, a uniform lithium nickel composite compound can be obtained.

The lithium metal composite oxide powder obtained by the calcining is suitably classified after pulverization and is regarded as a positive electrode active material applicable to a lithium secondary cell.

<Lithium Secondary Cell>

Next, a positive electrode using the positive electrode active material for a lithium secondary cell containing the lithium metal composite oxide powder, which is an aspect of the present invention, as a positive electrode active material of a lithium secondary cell, and a lithium secondary cell having the positive electrode will be described while describing the configuration of a lithium secondary cell.

In the following description, "positive electrode active material for a lithium secondary cell" is described as "positive electrode active material" in some cases.

An example of the lithium secondary cell of the present embodiment includes a positive electrode, a negative electrode, a separator interposed between the positive electrode and the negative electrode, and an electrolytic solution disposed between the positive electrode and the negative electrode.

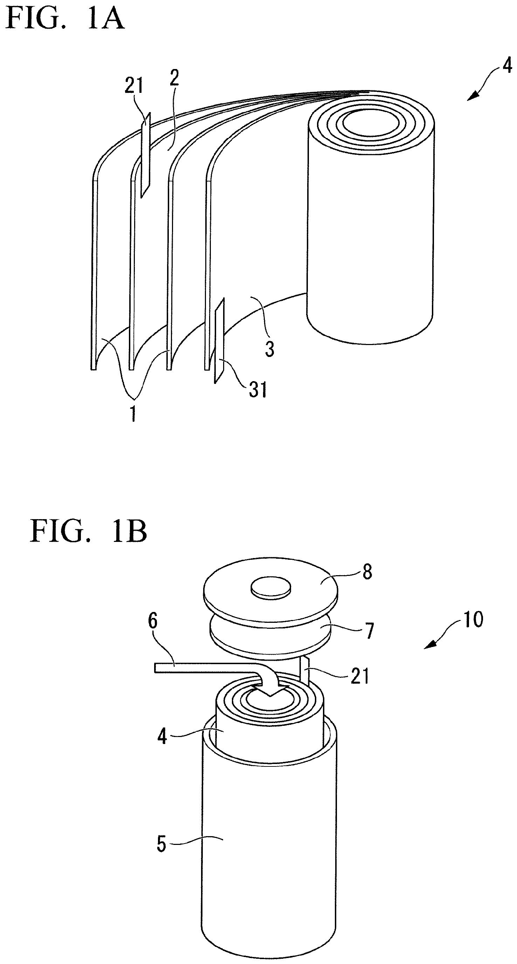

FIGS. 1A and 1B are schematic views illustrating an example of the lithium secondary cell of the present embodiment. A cylindrical lithium secondary cell 10 of the present embodiment is manufactured as follows.

First, as illustrated in FIG. 1A, a pair of separators 1 having a strip shape, a strip-shaped positive electrode 2 having a positive electrode lead 21 at one end, and a strip-like negative electrode 3 having a negative electrode lead 31 at one end are stacked in order of the separator 1, the positive electrode 2, the separator 1, and the negative electrode 3 and are wound to form an electrode group 4.

Next, as shown in FIG. 1B, the electrode group 4 and an insulator (not illustrated) are accommodated in a cell can 5, the can bottom is then sealed, the electrode group 4 is impregnated with an electrolytic solution 6, and an electrolyte is disposed between the positive electrode 2 and the negative electrode 3. Furthermore, the upper portion of the cell can 5 is sealed with a top insulator 7 and a sealing body 8, whereby the lithium secondary cell 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary cell having the electrode group 4, a shape defined by IEC60086 which is a standard for a cell defined by the International Electrotechnical Commission (IEC), or by JIS C 8500 can be adopted. For example, shapes such as a cylindrical shape and a square shape can be adopted.

Furthermore, the lithium secondary cell is not limited to the wound type configuration, and may have a stacked type configuration in which a stacked structure of a positive electrode, a separator, a negative electrode, and a separator is repeatedly stacked. The stacked type lithium secondary cell can be exemplified by a so-called coin type cell, a button type cell, and a paper type (or sheet type) cell.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus improve the charge and discharge efficiency and output characteristics. However, when the carbon black is added too much, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced.

(Binder)

A thermoplastic resin can be used as the binder included in the positive electrode of the present embodiment.
As the thermoplastic resin, fluorine resins such as polyvinylidene fluoride (hereinafter, sometimes referred to as PVdF), polytetrafluoroethylene (hereinafter, sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.
These thermoplastic resins may be used as a mixture of two or more. By using a fluorine resin and a polyolefin resin as the binder and setting the ratio of the fluorine resin to the total mass of the positive electrode mixture to 1 mass% or more and 10 mass% or less and the ratio of the fluorine resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.
As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.
In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes referred to as NMP) can be adopted.
Examples of a method of applying the paste of the positive electrode mixture to the positive electrode current collector include a slit die coating method, a screen coating method, a curtain coating method, a knife coating method, a gravure coating method, and an electrostatic spraying method.
The positive electrode can be manufactured by the method mentioned above.

(Negative Electrode)

The negative electrode included in the lithium secondary cell of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon represented by the formula $SiO_x$ (where, x is a positive real number) such as $SiO_2$ and $SiO$; oxides of titanium represented by the formula $TiO_x$ (where x is a positive real number) such as $TiO_2$ and $TiO$; oxides of vanadium represented by the formula $VO_x$ (where x is a positive real number) such as $V_2O_5$ and $VO_2$; oxides of iron represented by the formula FeOx (where x is a positive real number) such as $Fe_3O_4$, $Fe_2O_3$, and $FeO$; oxides of tin represented by the formula $SnO_x$ (where x is a positive real number) such as $SnO_2$ and $SnO$; oxides of tungsten represented by a general formula $WO_x$ (where, x is a positive real number) such as $WO_3$ and $WO_2$; and metal complex oxides containing lithium and titanium or vanadium such as $Li_4Ti_5O_{12}$ and $LiVO_2$ can be adopted.

As the sulfides that can be used as the negative electrode active material, sulfides of titanium represented by the formula $TiS_x$ (where, x is a positive real number) such as $Ti_2S_3$, $TiS_2$, and $TiS$; sulfides of vanadium represented by the formula $VS_x$ (where x is a positive real number) such $V_3S_4$, $VS_2$, and $VS$; sulfides of iron represented by the formula $FeS_x$ (where x is a positive real number) such as $Fe_3S_4$, $FeS_2$, and $FeS$; sulfides of molybdenum represented by the formula MoSx (where x is a positive real number) such as $Mo_2S_3$ and $MoS_2$; sulfides of tin represented by the formula $SnS_x$ (where x is a positive real number) such as $SnS_2$ and $SnS$; sulfides of tungsten represented by $WS_x$ (where x is a positive real number) such as $WS_2$; sulfides of antimony represented by the formula $SbS_x$ (where x is a positive real number) such as $Sb_2S_3$; and sulfides of selenium represented by the formula $SeS_x$ (where x is a positive real number) such as $Se_5S_3$, $SeS_2$, and $SeS$ can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary cell of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during cell use (during charging and discharging).

In addition, the porosity of the separator is preferably 30 vol% or more and 80 vol% or less, and more preferably 40 vol% or more and 70 vol% or less with respect to the volume of the separator. The separator may be a laminate of separators having different porosity.

(Electrolytic Solution)

The electrolytic solution included in the lithium secondary cell of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during a long-term use, and being non-degradable even in a case where a graphite material such as natural graphite or artificial graphite is used as the negative electrode active material.

Furthermore, as the electrolytic solution, it is preferable to use an electrolytic solution containing a lithium compound containing fluorine such as $LiPF_6$ and an organic solvent having a fluorine substituent in order to enhance the safety of the obtained lithium secondary cell. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolyte is held in a polymer compound can also be used. Inorganic solid electrolytes containing sulfides such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$ can be adopted, and a mixture or two or more thereof may be used. By using these solid electrolytes, the safety of the lithium secondary cell may be further enhanced.

In addition, in a case of using a solid electrolyte in the lithium secondary cell of the present embodiment, there may be cases where the solid electrolyte plays a role of the separator, and in such a case, the separator may not be required.

Since the positive electrode active material having the above-described configuration uses the lithium metal composite oxide powder of the present embodiment described above, the life of the lithium secondary cell using the positive electrode active material can be extended.

Moreover, since the positive electrode having the above-described configuration has the positive electrode active material for a lithium secondary cell of the present embodiment described above, the life of the lithium secondary cell can be extended.

Furthermore, since the lithium secondary cell having the above-described configuration has the positive electrode described above, the lithium secondary cell having a longer life than in the related art can be achieved.

[Examples]

Next, the aspect of the present invention will be described in more detail with reference to examples.

In this example, the evaluation of the lithium metal composite oxide powder and the preparation and evaluation of the positive electrode for a lithium secondary cell and the lithium secondary cell were performed as follows.

(1) Evaluation of Lithium Metal Composite Oxide Powder

1. Average Particle Crushing Strength of Secondary Particles

The average particle crushing strength of the secondary particles was measured by applying a test pressure on a single secondary particle randomly selected from the lithium metal composite oxide powder using a micro compression tester (MCT-510, manufactured by Shimadzu Corporation). The pressure value at which the displacement of the secondary particle became maximum while the test pressure was almost constant was taken as a test force (P), and the particle crushing strength (St) was calculated by the formula by Hiramatsu et al. described above. Finally, the average particle crushing strength was obtained from the average value from a total of five particle crushing strength tests.

2. BET Specific Surface Area Measurement

After 1 g of the lithium metal composite oxide powder was dried in a nitrogen atmosphere at 105°C for 30 minutes, the powder was measured using a BET specific surface area meter (Macsorb (registered trademark) manufactured by MOUNTECH Co., Ltd.).

3. Measurement of Cumulative Particle Size of Lithium Metal Composite Oxide Powder

0.1 g of the lithium metal composite oxide powder to be measured was poured into 50 ml of 0.2 mass% sodium hexametaphosphate aqueous solution to obtain a dispersion liquid in which the powder was dispersed. The particle size distribution of the obtained dispersion liquid was measured using Mastersizer 2000 manufactured by Malvern Instruments Ltd. (laser diffraction scattering particle size distribution measuring device) to obtain a volume-based cumulative particle size distribution curve. In the obtained cumulative particle size distribution curve, the volume particle sizes viewed from the fine particle side at a 10% cumulative point and a 90% cumulative point were respectively referred to as $D_{10}$ and $D_{90}$.

4. Powder X-Ray Diffraction Measurement

Powder X-ray diffraction measurement was performed using an X-ray diffractometer (X'Pert PRO manufactured by Malvern Panalytical Ltd). The lithium metal composite oxide powder was provided in a dedicated substrate, and measurement was performed using a Cu-K$\alpha$ radiation source at a diffraction angle in a range of $2\theta = 10°$ to $90°$ to obtain a powder X-ray diffraction pattern. Using powder X-ray diffraction pattern comprehensive analysis software JADE 5, the half-width A of the diffraction peak within a range of $2\theta = 18.7 \pm 1°$ and the half-width B of the diffraction peak within a range of $2\theta = 44.4 \pm 1°$ were obtained from the powder X-ray diffraction pattern, and A/B was calculated.

Next, using the Scherrer equation, the crystallite diameter of the diffraction peak within a range of $2\theta = 18.7 \pm 1°$ and the crystallite diameter of the diffraction peak within a range of $2\theta = 44.4 \pm 1°$ were respectively obtained as $L_a$ and $L_b$, and $L_a/L_b$ was finally calculated.

Diffraction peak of the half-width A: $2\theta = 18.7 \pm 1°$
Diffraction peak of the half-width B: $2\theta = 44.4 \pm 1°$

5. Compositional Analysis

The compositional analysis of the lithium metal composite oxide powder formed by the method described below was performed by using an inductively coupled plasma emission analyzer (SPS 3000, manufactured by SII Nano Technology Inc.) after dissolving the obtained lithium metal composite oxide powder in hydrochloric acid.

(2) Production of Positive Electrode for Lithium Secondary Cell

A paste-like positive electrode mixture was prepared by adding the positive electrode active material for a lithium secondary cell containing the lithium metal composite oxide powder obtained by the manufacturing method described later, a conductive material (acetylene black), and a binder (PVdF) to achieve a composition of positive electrode active material for a lithium secondary cell:conductive material:binder = 92:5:3 (mass ratio) and performing kneading thereon. During the preparation of the positive electrode mixture, N-methyl-2-pyrrolidone was used as an organic solvent.

The obtained positive electrode mixture was applied to a 40 $\mu$m-thick Al foil serving as a current collector and dried at 60°C for 5 hours. Subsequently, the dried positive electrode was rolled with a roll press set to a linear pressure of 250 N/m, and vacuum drying was performed thereon at 150°C for 8 hours to obtain a positive electrode for a lithium secondary cell. The electrode area of the positive electrode for a lithium secondary cell was set to 1.65 cm$^2$.

(3) Production of Lithium Secondary Cell (Coin Type Half Cell)

The following operation was performed in a glove box under an argon atmosphere.

The positive electrode for a lithium secondary cell produced in "(2) Production of Positive Electrode for Lithium Secondary Cell" was placed on the lower lid of a part for coin type cell R2032 (manufactured by Hohsen Corp.) with the aluminum foil surface facing downward, and a laminated film separator (a heat-resistant porous layer (thickness 16 $\mu$m) was laminated on a polyethylene porous film) was placed thereon. 300 $\mu$l of the electrolytic solution was injected thereinto. As the electrolytic solution, an electrolytic solution obtained by dissolving, in a mixed solution of ethylene carbonate (hereinafter, sometimes referred to as EC), dimethyl carbonate (hereinafter, sometimes referred to as DMC), and ethyl methyl carbonate (hereinafter, sometimes referred to as EMC) in a ratio of 30:35:35 (volume ratio), LiPF$_6$ to achieve 1.0 mol/l (hereinafter, sometimes referred to as LiPF$_6$/EC+DMC+EMC) was used.

Next, metal lithium was used as the negative electrode, and the negative electrode was placed on the upper side of the laminated film separator, covered with the upper lid via a gasket, and caulked by a caulking machine, whereby a lithium secondary cell (coin type half cell R2032, hereinafter, sometimes referred to as "half cell") was produced.

(4) Volume Capacity Density Test

A charge and discharge test was conducted under the following conditions using the half cell produced in "(3) Production of Lithium Secondary Cell (Coin Type Half Cell)", and the volume capacity density was calculated.

<Charge and Discharge Test>

Test temperature: 25°C
Charging maximum voltage 4.3 V, charging time 6 hours, charging current 0.2 CA, constant current constant voltage charging
Discharging minimum voltage 2.5 V, discharging time 5 hours, discharging current 0.2 CA, constant current discharging

<Calculation of Volume Capacity Density>

From the discharge specific capacity of the positive electrode active material for a lithium secondary cell discharged to 0.2 C and the mass per unit volume of the positive electrode after rolling, the volume capacity density was determined based on the following calculation formula.

$$\text{Volume capacity density (mAh/cm}^3\text{)} = \text{specific capacity of positive electrode}$$

$$\text{active material for lithium secondary cell (mAh/g)} \times \text{density of positive electrode after}$$

$$\text{rolling (g/cm}^3\text{)}$$

(Example 1)

1. Production of Positive Electrode Active Material 1 for Lithium Secondary Cell

After water was added to a reaction tank equipped with a stirrer and an overflow pipe, an aqueous solution of sodium hydroxide was added thereto, and the liquid was maintained at a temperature of 45°C.
An aqueous solution of nickel sulfate, an aqueous solution of cobalt sulfate, and an aqueous solution of manganese sulfate were mixed so that the atomic ratio of nickel atoms, cobalt atoms, and manganese atoms became 0.315:0.330:0.355, whereby a mixed raw material solution was adjusted.
Next, the mixed raw material solution and an aqueous solution of ammonium sulfate as a complexing agent were continuously added into the reaction tank during stirring, and nitrogen gas was continuously flowed into the reaction tank so as to cause the oxygen concentration to be 0%.
An aqueous solution of sodium hydroxide was timely added dropwise so that the pH (when measured at 40°C) of the solution in the reaction tank became 11.7 to obtain nickel cobalt manganese composite hydroxide particles, and the particles were washed, thereafter dehydrated by centrifugation, washed, dehydrated so as to isolate, and dried at 105°C, whereby a nickel cobalt manganese composite hydroxide 1 was obtained.
The nickel cobalt manganese composite hydroxide 1 and lithium carbonate powder were weighed to achieve Li/(Ni + Co + Mn) = 1.06 (molar ratio) and mixed. Thereafter, the mixture was calcined in an air atmosphere at 760°C for 6 hours, and further calcined in an air atmosphere at 910°C for 6 hours. The obtained lithium metal composite oxide powder was used as a positive electrode active material 1 for a lithium secondary cell.

2. Evaluation of Positive Electrode Active Material 1 for Lithium Secondary Cell

Compositional analysis of the positive electrode active material 1 for a lithium secondary cell was performed, and when the composition was made to correspond to Composition Formula (1), x = 0.03, y = 0.330, z = 0.355, and w = 0 were obtained.
The BET specific surface area of the positive electrode active material 1 for a lithium secondary cell was 0.5 $m^2/g$, the average particle crushing strength was 149.4 MPa, $D_{90}/D_{10}$ was 2.0, A/B between the half-width A within $2\theta$ = 18.7 $\pm$ 1° and the half-width B within $2\theta$ = 44.4 $\pm$ 1° was 0.653, $L_a/L_b$ when the crystallite diameter of the diffraction peak within a range of $2\theta$ = 18.7 $\pm$ 1° and the crystallite diameter of the diffraction peak within a range of $2\theta$ = 44.4 $\pm$ 1° were respectively referred to as $L_a$ and $L_b$ was 1.4, and the volume capacity density ($mAh/cm^3$) at the time of 0.2 C discharge was 459 $mAh/cm^3$.

(Comparative Example 1)

1. Production of Positive Electrode Active Material 2 for Lithium Secondary Cell

A nickel cobalt manganese composite hydroxide 2 was obtained in the same manner as in Example 1 except that an oxygen-containing gas obtained by mixing air in nitrogen gas was continuously flowed into the reaction tank so as to cause the oxygen concentration to be 4.0%.
The nickel cobalt manganese composite hydroxide 2 and lithium carbonate powder were weighed to achieve Li/(Ni + Co + Mn) = 1.00 (molar ratio) and mixed. Thereafter, the mixture was calcined in an air atmosphere at 690°C for 5 hours, and further calcined in an air atmosphere at 980°C for 6 hours. The obtained lithium metal composite oxide powder was used as a positive electrode active material 2 for a lithium secondary cell.

2. Evaluation of Positive Electrode Active Material 2 for Lithium Secondary Cell

Compositional analysis of the positive electrode active material 2 for a lithium secondary cell was performed, and when the composition was made to correspond to Composition Formula (1), x = 0, y = 0.329, z = 0.356, and w = 0 were obtained.
The BET specific surface area of the positive electrode active material 2 for a lithium secondary cell was 0.8 $m^2/g$, the average particle crushing strength was 62.1 MPa, $D_{90}/D_{10}$ was 2.6, A/B between the half-width A within $2\theta$ = 18.7 $\pm$ 1° and the half-width B within $2\theta$ = 44.4 $\pm$ 1° was 0.970, $L_a/L_b$ when the crystallite diameter of the diffraction peak within a range of $2\theta$ = 18.7 $\pm$ 1° and the crystallite diameter of the diffraction peak within a range of $2\theta$ = 44.4 $\pm$ 1° were respectively referred to as $L_a$ and $L_b$ was 1.0, and the volume capacity density ($mAh/cm^3$) after 0.2 C was 374 $mAh/cm^3$.

(Comparative Example 2)

1. Production of Positive Electrode Active Material 3 for Lithium Secondary Cell

The nickel cobalt manganese composite hydroxide 1 was obtained in the same manner as in Example 1.
The nickel cobalt manganese composite hydroxide 1 and lithium carbonate powder were weighed to achieve Li/(Ni + Co + Mn) = 1.02 (molar ratio) and mixed. Thereafter, the mixture was calcined in an air atmosphere at 690°C for 6 hours, and further calcined in an air atmosphere at 890°C for 6 hours. The obtained lithium metal composite oxide powder was used as a positive electrode active material 3 for a lithium secondary cell.

2. Evaluation of Positive Electrode Active Material 3 for Lithium Secondary Cell

Compositional analysis of the positive electrode active material 3 for a lithium secondary cell was performed, and when the composition was made to correspond to Composition Formula (1), x = 0.01, y = 0.331, z = 0.354, and w = 0 were obtained.
The BET specific surface area of the positive electrode active material 3 for a lithium secondary cell was 1.3 $m^2/g$, the average particle crushing strength was 102.3 MPa, $D_{90}/D_{10}$ was 1.9, A/B between the half-width A within $2\theta$ = 18.7 $\pm$ 1° and the half-width B within $2\theta$ = 44.4 $\pm$ 1° was 0.915, $L_a/L_b$ when the crystallite diameter of the diffraction peak within a range of $2\theta$ = 18.7 $\pm$ 1° and the crystallite diameter of the diffraction peak within a range of $2\theta$ = 44.4 $\pm$ 1° were respectively referred to as $L_a$ and $L_b$ was 1.1, and the volume capacity density ($mAh/cm^3$) at the time of 0.2 C discharge was 380 $mAh/cm^3$.

(Comparative Example 3)

1. Production of Positive Electrode Active Material 4 for Lithium Secondary Cell

A nickel cobalt manganese composite hydroxide 3 was obtained in the same manner as in Example 1 except that an oxygen-containing gas obtained by mixing air in nitrogen gas was continuously flowed into the reaction tank so as to cause the oxygen concentration to be 1.0%.
The nickel cobalt manganese composite hydroxide 3 and lithium carbonate powder were weighed to achieve Li/(Ni + Co + Mn) = 1.13 (molar ratio) and mixed. Thereafter, the mixture was calcined in an air atmosphere at 760°C for 6 hours, and further calcined in an air atmosphere at 900°C for 6 hours. The obtained lithium metal composite oxide powder was used as a positive electrode active material 4 for a lithium secondary cell.

2. Evaluation of Positive Electrode Active Material 4 for Lithium Secondary Cell

Compositional analysis of the positive electrode active material 4 for a lithium secondary cell was performed, and when the composition was made to correspond to Composition Formula (1), x = 0.06, y = 0.330, z = 0.355, and w = 0 were obtained.
The BET specific surface area of the positive electrode active material 4 for a lithium secondary cell was 0.7 $m^2/g$, the average particle crushing strength was 115.6 MPa, $D_{90}/D_{10}$ was 1.9, A/B between the half-width A within $2\theta$ = 18.7 $\pm$ 1° and the half-width B within $2\theta$ = 44.4 $\pm$ 1° was 0.879, $L_a/L_b$ when the crystallite diameter of the diffraction peak within a range of $2\theta$ = 18.7 $\pm$ 1° and the crystallite diameter of the diffraction peak within a range of $2\theta$ = 44.4 $\pm$ 1° were respectively referred to as $L_a$ and $L_b$ was 1.2, and the volume capacity density ($mAh/cm^3$) at the time of 0.2 C discharge was 365 $mAh/cm^3$.
The results of Example 1 and Comparative Examples 1 to 3 are described in Table 1 below.

[Table 1]

| | Composition | | | | | | BET | Average particle crushing strength | $D_{90}/D_{10}$ | Half-width ratio A/B | Crystallite diameter ratio $E_a/L_b$ | 0.2 C volume capacity density |
|---|---|---|---|---|---|---|---|---|---|---|---|---|
| | Li | Ni | Co | Mn | M | Kind of M | | | | | | |
| | x | 1-y-z-w | y | z | w | | $(m^2/g)$ | (MPa) | (-) | (-) | (-) | $(mAh/cm^3)$ |
| Example 1 | 0.03 | 0.315 | 0.330 | 0.355 | 0 | - | 0.5 | 149.4 | 2.0 | 0.653 | 1.4 | 459 |
| Comparative Example 1 | 0.00 | 0.315 | 0.329 | 0.356 | 0 | - | 0.8 | 62.1 | 2.6 | 0.970 | 1.0 | 374 |
| Comparative Example 2 | 0.01 | 0.315 | 0.331 | 0.354 | 0 | - | 1.3 | 102.3 | 1.9 | 0.915 | 1.1 | 380 |
| Comparative Example 3 | 0.06 | 0.315 | 0.330 | 0.355 | 0 | - | 0.7 | 115.6 | 1.9 | 0.879 | 1.2 | 365 |

As shown in the results shown in Table 1 above, Example 1 to which the present invention was applied had a volume capacity density of about 1.2 times those of Comparative Examples 1 to 3 to which the present invention was not applied.

(Example 2)

1. Production of Positive Electrode Active Material 5 for Lithium Secondary Cell

After water was added to a reaction tank equipped with a stirrer and an overflow pipe, an aqueous solution of sodium hydroxide was added thereto, and the liquid was maintained at a temperature of 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.600:0.200:0.200, whereby a mixed raw material solution was adjusted.

Next, the mixed raw material solution and an aqueous solution of zirconium sulfate and an aqueous solution of ammonium sulfate as complexing agents were continuously added into the reaction tank during stirring. The flow rate of the aqueous solution of zirconium sulfate was adjusted so that the atomic ratio of nickel atoms, cobalt atoms, manganese atoms, zirconium atoms became 0.599:0.198:0.198:0.005, and nitrogen gas was continuously flowed into the reaction tank so as to cause the oxygen concentration to be 0%. An aqueous solution of sodium hydroxide was appropriately added dropwise so that the pH (when measured at 40°C) of the solution in the reaction tank became 11.4 to obtain nickel cobalt manganese composite hydroxide particles, and the particles were washed, thereafter dehydrated by centrifugation, washed, dehydrated to isolate, and dried at 105°C, whereby a nickel cobalt manganese composite hydroxide 4 was obtained.

The nickel cobalt manganese composite hydroxide 4 and lithium carbonate powder were weighed to achieve Li/(Ni + Co + Mn + Zr) = 1.02 (molar ratio) and mixed. Thereafter, the mixture was calcined in an air atmosphere at 760°C for 5 hours, and further calcined in an air atmosphere at 850°C for 10 hours. The obtained lithium metal composite oxide powder was used as a positive electrode active material 5 for a lithium secondary cell.

2. Evaluation of Positive Electrode Active Material 5 for Lithium Secondary Cell

Compositional analysis of the positive electrode active material 5 for a lithium secondary cell was performed, and when the composition was made to correspond to Composition Formula (1), x = 0.01, y = 0.198, z = 0.198, and w = 0.005 were obtained.

The BET specific surface area of the positive electrode active material 5 for a lithium secondary cell was 0.3 $m^2/g$, the average particle crushing strength was 101.6 MPa, $D_{90}/D_{10}$ was 2.9, A/B between the half-width A within $2\theta$ = 18.7 $\pm$ 1° and the half-width B within $2\theta$ = 44.4 $\pm$ 1° was 0.788, $L_a/L_b$ when the crystallite diameter of the diffraction peak within a range of $2\theta$ = 18.7 + 1° and the crystallite diameter of the diffraction peak within a range of $2\theta$ = 44.4 $\pm$ 1° were respectively referred to as $L_a$ and $L_b$ was 1.2, and the volume capacity density ($mAh/cm^3$) at the time of 0.2 C discharge was 522 $mAh/cm^3$.

(Example 3)

1. Production of Positive Electrode Active Material 6 for Lithium Secondary Cell

After water was added to a reaction tank equipped with a stirrer and an overflow pipe, an aqueous solution of sodium hydroxide was added thereto, and the liquid was maintained at a temperature of 30°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.550:0.210:0.240, whereby a mixed raw material solution was adjusted.

Next, the mixed raw material solution and an aqueous solution of ammonium sulfate as a complexing agent were continuously added into the reaction tank under stirring, and nitrogen gas was continuously flowed into the reaction tank so as to cause the oxygen concentration to be 0%.

An aqueous solution of sodium hydroxide was appropriately added dropwise so that the pH (when measured at 40°C) of the solution in the reaction tank became 12.9 to obtain nickel cobalt manganese composite hydroxide particles, and the particles were washed, thereafter dehydrated by centrifugation, washed, dehydrated so as to isolate, and dried at 105°C, whereby a nickel cobalt manganese composite hydroxide 5 was obtained.

The nickel cobalt manganese composite hydroxide 5 and lithium carbonate powder were weighed to achieve Li/(Ni + Co + Mn) = 1.06 (molar ratio) and mixed. Thereafter, the mixture was calcined in an air atmosphere at 690°C for 5 hours, and further calcined in an air atmosphere at 875°C for 6 hours. The obtained lithium metal composite oxide powder was used as a positive electrode active material 6 for a lithium secondary cell.

2. Evaluation of Positive Electrode Active Material 6 for Lithium Secondary Cell

Compositional analysis of the positive electrode active material 6 for a lithium secondary cell was performed, and when the composition was made to correspond to Composition Formula (1), x = 0.03, y = 0.210, z = 0.240, and w = 0 were obtained.

The BET specific surface area of the positive electrode active material 6 for a lithium secondary cell was 0.7 $m^2/g$, the average particle crushing strength was 210.8 MPa, $D_{90}/D_{10}$ was 3.3, A/B between the half-width A within $2\theta$ = 18.7 $\pm$ 1° and the half-width B within $2\theta$ = 44.4 $\pm$ 1° was 0.898, $L_a/L_b$ when the crystallite diameter of the diffraction peak within a range of $2\theta$ = 18.7 $\pm$ 1° and the crystallite diameter of the diffraction peak within a range of $2\theta$ = 44.4 $\pm$ 1° were respectively referred to as $L_a$ and $L_b$ was 1.1, and the volume capacity density (mAh/cm$^3$) at the time of 0.2 C discharge was 512 mAh/cm$^3$.

(Comparative Example 4)

1. Production of Positive Electrode Active Material 7 for Lithium Secondary Cell

A nickel cobalt manganese composite hydroxide 6 was obtained in the same manner as in Example 3 except that an oxygen-containing gas obtained by mixing air in nitrogen gas was continuously flowed into the reaction tank so as to cause the oxygen concentration to be 4.0%.

The nickel cobalt manganese composite hydroxide 6 and lithium carbonate powder were weighed to achieve Li/(Ni + Co + Mn) = 1.00 (molar ratio) and mixed. Thereafter, the mixture was calcined in an air atmosphere at 690°C for 5 hours, and further calcined in an air atmosphere at 900°C for 6 hours. The obtained lithium metal composite oxide powder was used as a positive electrode active material 7 for a lithium secondary cell.

2. Evaluation of Positive Electrode Active Material 7 for Lithium Secondary Cell

Compositional analysis of the positive electrode active material 7 for a lithium secondary cell was performed, and when the composition was made to correspond to Composition Formula (1), x = 0.00, y = 0.208, z = 0.242, and w = 0 were obtained.

The BET specific surface area of the positive electrode active material 7 for a lithium secondary cell was 0.7 $m^2/g$, the average particle crushing strength was 78.2 MPa, $D_{90}/D_{10}$ was 1.8, A/B between the half-width A within $2\theta$ = 18.7 $\pm$ 1° and the half-width B within $2\theta$ = 44.4 $\pm$ 1° was 0.812, $L_a/L_b$ when the crystallite diameter of the diffraction peak within a range of 20 = 18.7 $\pm$ 1° and the crystallite diameter of the diffraction peak within a range of $2\theta$ = 44.4 $\pm$ 1° were respectively referred to as $L_a$ and $L_b$ was 1.0, and the volume capacity density (mAh/cm$^3$) after 0.2 C was 453 mAh/cm$^3$.

(Comparative Example 5)

1. Production of Positive Electrode Active Material 8 for Lithium Secondary Cell

A nickel cobalt manganese composite hydroxide 7 was obtained in the same manner as in Example 3 except that the temperature of the liquid in the reaction tank was set to 60°C and the pH (when measured at 40°C) in the reaction tank was set to 11.5.

The nickel cobalt manganese composite hydroxide 7 and lithium carbonate powder were weighed to achieve Li/(Ni + Co + Mn) = 1.04 (molar ratio) and mixed. Thereafter, the mixture was calcined in an air atmosphere at 790°C for 3 hours, and further calcined in an oxygen atmosphere at 850°C for 10 hours. The obtained lithium metal composite oxide powder was used as a positive electrode active material 8 for a lithium secondary cell.

2. Evaluation of Positive Electrode Active Material 8 for Lithium Secondary Cell

Compositional analysis of the positive electrode active material 8 for a lithium secondary cell was performed, and when the composition was made to correspond to Composition Formula (1), x = 0.02, y = 0.209, z = 0.241, and w = 0 were obtained.

The BET specific surface area of the positive electrode active material 8 for a lithium secondary cell was 3.2 $m^2/g$, the average particle crushing strength was 115.2 MPa, $D_{90}/D_{10}$ was 2.5, A/B between the half-width A within $2\theta$ = 18.7 $\pm$ 1° and the half-width B within $2\theta$ = 44.4 $\pm$ 1° was 0.967, $L_a/L_b$ when the crystallite diameter of the diffraction peak within a range of $2\theta = 18.7 \pm 1°$ and the crystallite diameter of the diffraction peak within a range of $2\theta = 44.4 \pm 1°$ were respectively referred to as $L_a$ and $L_b$ was 1.0, and the volume capacity density (mAh/cm$^3$) at the time of 0.2 C discharge was 440 mAh/cm$^3$.

The results of Examples 2 and 3 and Comparative Examples 4 and 5 are described in Table 2 below.

[Table 2]

| | Composition | | | | | | BET | Average particle crushing strength | $D_{90}/D_{10}$ | Half-width ratio A/B | Crystallite diameter ratio $L_a/L_b$ | 0.2 C volume capacity density |
|---|---|---|---|---|---|---|---|---|---|---|---|---|
| | Li | Ni | Co | Mn | M | Kind of M | | | | | | |
| | x | 1-y-z-w | y | z | w | | (m²/g) | (MPa) | (-) | (-) | (-) | (mAh/cm³) |
| Example 2 | 0.01 | 0.599 | 0.198 | 0.198 | 0.005 | Zr | 0.3 | 101.6 | 2.9 | 0.788 | 1.2 | 522 |
| Example 3 | 0.03 | 0.550 | 0.210 | 0.240 | 0 | - | 0.7 | 210.8 | 3.3 | 0.898 | 1.1 | 512 |
| Comparative Example 4 | 0.00 | 0.550 | 0.208 | 0.242 | 0 | - | 0.7 | 78.2 | 1.8 | 0.812 | 1.0 | 453 |
| Comparative Example 5 | 0.02 | 0.550 | 0.209 | 0.241 | 0 | - | 3.2 | 115.2 | 2.5 | 0.967 | 1.0 | 440 |

As shown in the results shown in Table 2 above, Examples 2 and 3 to which the present invention was applied had a volume capacity density of about 1.2 times those of Comparative Examples 4 and 5 to which the present invention was not applied.

(Example 4)

1. Production of Positive Electrode Active Material 9 for Lithium Secondary Cell

After water was added to a reaction tank equipped with a stirrer and an overflow pipe, an aqueous solution of sodium hydroxide was added thereto, and the liquid was maintained at a temperature of 60°C.

An aqueous solution of nickel sulfate, an aqueous solution of cobalt sulfate, an aqueous solution of manganese sulfate, and an aqueous solution of aluminum sulfate were mixed so that the atomic ratio of nickel atoms, cobalt atoms, manganese atoms, and aluminum atoms became 0.875:0.095:0.02:0.01, whereby a mixed raw material solution was adjusted.

Next, the mixed raw material solution and an aqueous solution of ammonium sulfate as a complexing agent were continuously added into the reaction tank under stirring, and an oxygen-containing gas obtained by mixing air in nitrogen gas was continuously flowed into the reaction tank so as to cause the oxygen concentration to be 5.3%. An aqueous solution of sodium hydroxide was appropriately added dropwise so that the pH (when measured at 40°C) of the solution in the reaction tank became 12.2 to obtain nickel cobalt manganese composite hydroxide particles, and the particles were washed, thereafter dehydrated by centrifugation, washed, dehydrated so as to isolate, and dried at 105°C, whereby a nickel cobalt manganese composite hydroxide 8 was obtained.

An aqueous solution of LiOH was produced by dissolving $WO_3$ in 61 g/L. The produced aqueous solution of LiOH containing W dissolved therein was caused to coat the nickel cobalt manganese composite hydroxide 8 by a Lodige mixer so as to achieve W/(Ni + Co + Mn + Al + W) = 0.005 (molar ratio). The nickel cobalt manganese composite hydroxide 8 coated with W and lithium hydroxide monohydrate powder were weighed to achieve Li/(Ni + Co + Mn + Al + W) = 1.04 (molar ratio) and mixed. Thereafter, the mixture was calcined in an oxygen atmosphere at 760°C for 5 hours, and further calcined in an oxygen atmosphere at 760°C for 5 hours. The obtained lithium metal composite oxide powder was used as a positive electrode active material 9 for a lithium secondary cell.

2. Evaluation of Positive Electrode Active Material 9 for Lithium Secondary Cell

Compositional analysis of the positive electrode active material 9 for a lithium secondary cell was performed, and when the composition was made to correspond to Composition Formula (1), x = 0.02, y = 0.094, z = 0.019, and w = 0.016 were obtained.

The BET specific surface area of the positive electrode active material 9 for a lithium secondary cell was 0.3 $m^2$/g, the average particle crushing strength was 156.4 MPa, $D_{90}/D_{10}$ was 2.5, A/B between the half-width A within $2\theta = 18.7 \pm 1°$ and the half-width B within $2\theta = 44.4 \pm 1°$ was 0.803, $L_a/L_b$ when the crystallite diameter of the diffraction peak within a range of $2\theta = 18.7 \pm 1°$ and the crystallite diameter of the diffraction peak within a range of $2\theta = 44.4 \pm 1°$ were respectively referred to as $L_a$ and $L_b$ was 1.1, and the volume capacity density (mAh/$cm^3$) after 0.2 C was 621 mAh/$cm^3$.

(Comparative Example 6)

1. Production of Positive Electrode Active Material 10 for Lithium Secondary Cell

A lithium metal composite oxide powder obtained in the same manner as in Example 4 except that weighing and mixing were performed so as to achieve Li/(Ni + Co + Mn + Al + W) = 1.02 (molar ratio) and thereafter the mixture was calcined in an air atmosphere at 700°C for 5 hours and further calcined in an oxygen atmosphere at 700°C for 5 hours was used as a positive electrode active material 10 for a lithium secondary cell.

2. Evaluation of Positive Electrode Active Material 10 for Lithium Secondary Cell

Compositional analysis of the positive electrode active material 10 for a lithium secondary cell was performed, and when the composition was made to correspond to Composition Formula (1), x = 0.01, y = 0.093, z = 0.018, and w = 0.014 were obtained.

The BET specific surface area of the positive electrode active material 10 for a lithium secondary cell was 0.3 $m^2$/g, the average particle crushing strength was 81.0 MPa, $D_{90}/D_{10}$ was 2.7, A/B between the half-width A within $2\theta = 18.7 \pm 1°$ and the half-width B within $2\theta = 44.4 \pm 1°$ was 0.786, $L_a/L_b$ when the crystallite diameter of the diffraction peak within a range of $2\theta = 18.7 \pm 1°$ and the crystallite diameter of the diffraction peak within a range of $2\theta = 44.4 \pm 1°$ were respectively referred to as $L_a$ and $L_b$ was 1.2, and the volume capacity density (mAh/cm$^3$) after 0.2 C was 550 mAh/cm$^3$.

(Comparative Example 7)

1. Production of Positive Electrode Active Material 11 for Lithium Secondary Cell

After water was added to a reaction tank equipped with a stirrer and an overflow pipe, an aqueous solution of sodium hydroxide was added thereto, and the liquid was maintained at a temperature of 60°C.

An aqueous solution of nickel sulfate, an aqueous solution of cobalt sulfate, an aqueous solution of manganese sulfate, and an aqueous solution of aluminum sulfate were mixed so that the atomic ratio of nickel atoms, cobalt atoms, manganese atoms, and aluminum atoms became 0.88:0.07:0.03:0.02, whereby a mixed raw material solution was adjusted.

Next, the mixed raw material solution and an aqueous solution of ammonium sulfate as a complexing agent were continuously added into the reaction tank under stirring, and nitrogen gas was continuously flowed into the reaction tank so as to cause the oxygen concentration to be 0%.

An aqueous solution of sodium hydroxide was appropriately added dropwise so that the pH (when measured at 40°C) of the solution in the reaction tank became 11.8 to obtain nickel cobalt manganese composite hydroxide particles, and the particles were washed, thereafter dehydrated by centrifugation, washed, dehydrated so as to solate, and dried at 105°C, whereby a nickel cobalt manganese composite hydroxide 9 was obtained.

The nickel cobalt manganese composite hydroxide 9 and lithium carbonate powder were weighed to achieve Li/(Ni + Co + Mn + Al) = 1.00 (molar ratio) and mixed. Thereafter, the mixture was calcined in an air atmosphere at 680°C for 5 hours, and further calcined in an air atmosphere at 680°C for 5 hours. The obtained lithium metal composite oxide powder was used as a positive electrode active material 11 for a lithium secondary cell.

2. Evaluation of Positive Electrode Active Material 11 for Lithium Secondary Cell

Compositional analysis of the positive electrode active material 11 for a lithium secondary cell was performed, and when the composition was made to correspond to Composition Formula (1), x = 0, y = 0.069, z = 0.030, and w = 0.020 were obtained.

The BET specific surface area of the positive electrode active material 11 for a lithium secondary cell was 1.8 m$^2$/g, the average particle crushing strength was 105.4 MPa, $D_{90}/D_{10}$ was 1.9, A/B between the half-width A within $2\theta = 18.7 \pm 1°$ and the half-width B within $2\theta = 44.4 \pm 1°$ was 0.716, $L_a/L_b$ when the crystallite diameter of the diffraction peak within a range of $2\theta = 18.7 \pm 1°$ and the crystallite diameter of the diffraction peak within a range of $2\theta = 44.4 \pm 1°$ were respectively referred to as $L_a$ and $L_b$ was 1.0, and the volume capacity density (mAh/cm$^3$) after 0.2 C was 525 mAh/cm$^3$.

The results of Example 4 and Comparative Examples 6 and 7 are described in Table 3 below.

[Table 3]

| | Composition | | | | | | BET | Average particle crushing strength | $D_{90}/D_{10}$ | Half-width ratio A/B | Crystallite diameter ratio $L_a/L_b$ | 0.2 C volume capacity density |
|---|---|---|---|---|---|---|---|---|---|---|---|---|
| | Li | Ni | Co | Mn | M | Kind of M | | | | | | |
| | x | 1-y-z-w | y | z | w | of M | $(m^2/g)$ | (MPa) | (-) | (-) | (-) | $(mAh/cm^3)$ |
| Example 4 | 0.02 | 0.871 | 0.094 | 0.019 | 0.016 | Al+W | 0.3 | 156.4 | 2.5 | 0.803 | 1.1 | 621 |
| Comparative Example 6 | 0.01 | 0.875 | 0.093 | 0.018 | 0.014 | Al+W | 0.3 | 81.0 | 2.7 | 0.786 | 1.2 | 550 |
| Comparative Example 7 | 0.00 | 0.881 | 0.069 | 0.030 | 0.020 | Al | 1.8 | 105.4 | 1.9 | 0.716 | 1.0 | 525 |

As shown in the results shown in Table 3 above, Example 4 to which the present invention was applied had a volume capacity density of about 1.2 times those of Comparative Examples 6 and 7 to which the present invention was not applied.

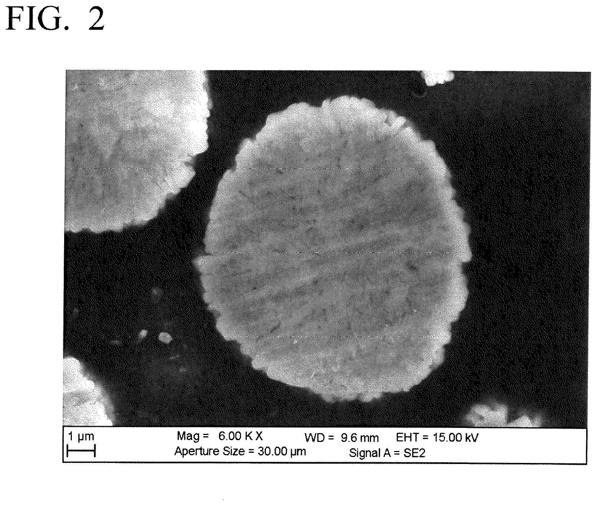

FIG. 2 shows an SEM photograph of the secondary particle cross section of the positive electrode active material for a lithium secondary cell of Example 1.

A particle of the positive electrode active material for a lithium secondary cell to be measured was placed on a conductive sheet attached onto a sample stage, and irradiated with an electron beam having an acceleration voltage of 20 kV using JSM-5510 manufactured by JEOL Ltd. for SEM observation. From the image (SEM photograph) obtained by the SEM observation, the secondary particle cross section of the positive electrode active material for a lithium secondary cell was observed.

As a result, as shown in FIG. 2, the secondary particle had a dense structure.

Industrial Applicability

According to the present invention, it is possible to provide a positive electrode active material for a lithium secondary cell having a high volume capacity density, a positive electrode for a lithium secondary cell using the positive electrode active material for a lithium secondary cell, and a lithium secondary cell having the positive electrode for a lithium secondary cell.

Reference Signs List

1: separator
2: positive electrode
3: negative electrode
4: electrode group
5: cell can
6: electrolytic solution
7: top insulator
8: sealing body
10: lithium secondary cell
21: positive electrode lead
31: negative electrode lead

**Claims**

1. A lithium metal composite oxide powder comprising:

   primary particles of a lithium metal composite oxide; and
   secondary particles formed by aggregation of the primary particles,
   wherein the lithium metal composite oxide is represented by Composition Formula (1), and
   the lithium metal composite oxide powder satisfies all of requirements (A), (B), and (C),

   $$Li[Li_x(Ni_{(1-y-z-w)}Co_yMn_zM_w)_{1-x}]O_2 \qquad (1)$$

   (where M is one or more metal elements selected from the group consisting of Fe, Cu, Ti, Mg, Al, W, B, Mo, Nb, Zn, Sn, Zr, Ga, and V and $-0.1 \le x \le 0.2$, $0 < y \le 0.4$, $0 \le z \le 0.4$, and $0 \le w \le 0.1$ are satisfied),

   (A) a BET specific surface area of the lithium metal composite oxide powder is less than 1 $m^2/g$,
   (B) an average particle crushing strength of the secondary particles exceeds 100 MPa, and
   (C) a ratio ($D_{90}/D_{10}$) of a 90% cumulative volume particle size $D_{90}$ to a 10% cumulative volume particle size $D_{10}$ is 2.0 or more.

2. The lithium metal composite oxide powder according to claim 1,
   wherein, in powder X-ray diffraction measurement using CuKα radiation, assuming that a half-width of a diffraction peak in a range of 2θ = 18.7 ± 1° is A and a half-width of a diffraction peak in a range of 2θ = 44.4 ± 1° is B, A/B is 0.9 or less.

3. The lithium metal composite oxide powder according to claim 1 or 2,
wherein, in powder X-ray diffraction measurement using CuK$\alpha$ radiation, assuming that a crystallite diameter of a diffraction peak in a range of $2\theta = 18.7 \pm 1°$ is $L_a$ and a crystallite diameter of a diffraction peak in a range of $2\theta = 44.4 \pm 1°$ is $L_b$, $L_a/L_b$ exceeds 1.

4. The lithium metal composite oxide powder according to any one of claims 1 to 3,
wherein, in Composition Formula (1), $0 < x \leq 0.2$ is satisfied.

5. A positive electrode active material for a lithium secondary cell, comprising:
the lithium metal composite oxide powder according to any one of claims 1 to 4.

6. A positive electrode for a lithium secondary cell, comprising:
the positive electrode active material for a lithium secondary cell according to claim 5.

7. A lithium secondary cell comprising:
the positive electrode for a lithium secondary cell according to claim 6.

FIG. 1A

FIG. 1B

FIG. 2

| 1 μm | Mag = 6.00 K X | WD = 9.6 mm | EHT = 15.00 kV |
|---|---|---|---|
| | Aperture Size = 30.00 μm | Signal A = SE2 | |

## INTERNATIONAL SEARCH REPORT

| International application No. |
| --- |
| PCT/JP2017/042388 |

**A. CLASSIFICATION OF SUBJECT MATTER**
Int.Cl. C01G53/00(2006.01)i, H01M4/505(2010.01)i, H01M4/525(2010.01)i

According to International Patent Classification (IPC) or to both national classification and IPC

**B. FIELDS SEARCHED**

Minimum documentation searched (classification system followed by classification symbols)
Int.Cl. C01G53/00, H01M4/505, H01M4/525

| Documentation searched other than minimum documentation to the extent that such documents are included in the fields searched | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2015/182665 A1 (SUMITOMO CHEMICAL CO., LTD.) 03 December 2015, paragraphs [0029]–[0032], [0034]–[0036], [0038]–[0041], [0047]–[0061], examples, tables 1, 2, claims 1–4, 8–10 &US 2017/0187031 A1, paragraphs [0036]–[0055], [0065]–[0079], examples, tables 1, 2, claims 1–4, 8–10 & EP 3151316 A1 & CN 106463721 A & KR 10-2017-0009876 A | 1–7 |
| X | WO 2004/082046 A1 (AGC SEIMI CHEMICAL CO., LTD.) 23 September 2004, page 1, paragraph [0001], page 3, lines 9–20, page 5, lines 9–15, examples 1–5, claims 1, 2, 4, 8, 9 & US 2005/0220700 A1, paragraphs [0001], [0010]–[0012], [0023], examples 1–5, claims 1, 2, 4, 8, 10–12 & KR 10-2005-0044771 A & CN 1701451 A | 1–7 |
| A | WO 2015/111740 A1 (SUMITOMO CHEMICAL CO., LTD.) 30 July 2015, examples, claims & US 2016/0380263 A1, examples, claims & EP 3101716 A1 & CN 105917500 A & KR 10-2016-0113607 A | 1–7 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 December 2017 (27.12.2017) | 16 January 2018(16.01.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2017/042388

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2016/060105 A1 (SUMITOMO CHEMICAL CO., LTD.) 24 April 2016, examples, claims & US 2017/0237069 A1, examples, claims & EP 3208872 A1 & KR 10-2017-0057450 A & CN 107078293 A | 1-7 |
| A | WO 2015/1897 40 A1 (UMICORE) 17 December 2015 & JP 2017-525089 A &US 2017/0125808 A1 & EP 3155680 A1 & CN 106463724 A & KR 10-2017-0018405 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016242573 A
- JP 2004220897 A
- WO 2005124898 A
- WO 2005028371 A
- WO 2005020354 A
- JP 2002201028 A

### Non-patent literature cited in the description

- **HIRAMATSU et al.** shown in Formula (A). *Journal of the Mining and Metallurgical Institute of Japan,* 1965, vol. 81
- **IZUMI NAKAI ; FUJIO IZUMI.** *Practice of powder X-ray analysis, Introduction to Rietveld method,* 20 June 2006
- **YOSHIO WASEDA ; MATSUBARA EIICHIRO.** *X-ray structure analysis, determine arrangement of atoms,* 30 April 2002